# NEUE EUROPÄISCHE PATENTSCHRIFT

(11) **EP 3 174 613 B2**
(45) Veröffentlichungstag und Bekanntmachung des Hinweises auf die Entscheidung über den Einspruch: **25.01.2023**
(45) Hinweis auf die Patenterteilung: 26.12.2018
(21) Anmeldenummer: 15744171.8
(22) Anmeldetag: 27.07.2015
(51) Int. Cl.: B01D 36/00

(54) **WASSERABSCHEIDEELEMENT MIT WASSERDETEKTIONSELEKTRODEN**
WATER SEPARATOR ELEMENT COMPRISING WATER DETECTION ELECTRODES
ÉLÉMENT DE SÉPARATION D'EAU MUNI D'ÉLECTRODES DE DÉTECTION D'EAU

(30) Priorität: 29.07.2014 DE 102014010997
(43) Veröffentlichungstag der Anmeldung: 07.06.2017
(73) Patentinhaber: MANN+HUMMEL GmbH, 71636 Ludwigsburg (DE)
(72) Erfinder: WILDERMUTH, Andreas, 71672 Marbach (DE); NEUBAUER, Helen, 71638 Ludwigsburg (DE); WEIDINGER, Sven, 71384 Weinstadt (DE); KRAFT, Gunther, 71642 Ludwigsburg (DE); GOEDECKE, Marco, 71691 Freiberg (DE)
(74) Vertreter: Maiwald GmbH
(86) Internationale Anmeldenummer: PCT/EP2015/067119
(87) Internationale Veröffentlichungsnummer: WO 2016/016172

(56) Entgegenhaltungen:
- EP-A1- 1 400 271
- WO-A1-2013/083705
- WO-A1-2015/128711
- WO-A1-2015/193574
- WO-A2-2015/040479
- DE-A1-102011 078 362
- DE-A1-102012 221 890

## Beschreibung

### Technisches Gebiet

Die Erfindung betrifft ein Wasserabscheideelement für einen Kraftstofffilter eines Kraftfahrzeuges.

### Stand der Technik

Ein Wasserabscheideelement zum Filtern von Kraftstoff eines Kraftfahrzeuges ist aus der DE 10 2011 078 362 A1 bekannt geworden. Das bekannte Wasserabscheideelement ist zweistufig wasserabscheidend ausgebildet. Es weist ein Partikelfiltermedium und ein Endabscheidersieb zum Abscheiden von Wasser auf. Das abgeschiedene Wasser sammelt sich in einem Wassersammelraum. Ein zu hoher Stauwasserpegel im Wassersammelraum wird von einem Wasserstandsensor detektiert, dessen Elektroden in einem Trägerstab des Kraftstofffilters geführt werden.

Weiterhin ist es aus der DE 10 2011 081 141 A1 bekannt geworden, eine Entwässerungseinrichtung an einem Filtergehäuse vorzusehen, um abgeschiedenes Wasser aus dem Filtergehäuse ablassen zu können. Die Entwässerungseinrichtung ist durch eine Rastverbindung an das Filtergehäuse gekoppelt.

Die WO 2010/049208 A1 offenbart eine Filtereinrichtung mit einem Wassersensor, der in baulicher Einheit mit einer Heizbahn der Filtereinrichtung ausgebildet ist. Der Wassersensor weist Sensorpins auf, die über elektrische Kontakte mit einem Steckverbinder koppelbar sind.

Aus der US 2010/0276352 A1 ist es bekannt geworden, einen Filter mit Elektroden zur Wasserstandsdetektion zu versehen. Die Elektroden sind federelastisch vorgespannt und berühren sich im nicht eingebauten Zustand des Wasserabscheideelements. Durch den Einbau des Wasserabscheideelements werden die Elektroden beabstandet, so dass diese - voneinander elektrisch isoliert - nur im Falle eines zu hohen Wasserstandes einen elektrischen Strom leiten. Hierdurch werden die Elektroden sowohl zur Detektion des Wasserstandes als auch zur Sicherstellung eines korrekten Einbaus des Wasserabscheideelements verwendet.

Die Zuverlässigkeit der Wasserdetektion im Wassersammelraum sinkt jedoch aufgrund von Abnutzungen und Verschmutzungen im Kraftstofffilter.

### Offenbarung der Erfindung

Der Erfindung liegt daher die Aufgabe zugrunde, eine dauerhaft zuverlässige Wasserdetektion in einem Kraftstofffilter zu ermöglichen.

Diese Aufgabe wird durch ein Wasserabscheideelement mit den Merkmalen des Anspruchs 1 gelöst. Die Unteransprüche geben zweckmäßige Weiterbildungen an.

Die erfindungsgemäße Aufgabe wird somit gelöst durch ein Wasserabscheideelement für einen Kraftstofffilter eines Kraftfahrzeuges, wobei das Wasserabscheideelement zwei Wasserstandselektroden zur Detektion von Stauwasser in einem Wassersammelraum des Kraftstofffilters aufweist und die Wasserstandselektroden über zwei Kontaktelektroden elektrisch kontaktierbar sind, wobei die Kontaktelektroden mit den Wasserstandselektroden elektrisch leitfähig verbunden sind.

Durch die Anordnung der Wasserstandselektroden am Wasserabscheideelement werden die Wasserstandselektroden bei einem Wechsel des Wasserabscheideelements erneuert. Die Wasserdetektion kann dadurch dauerhaft zuverlässig erfolgen.

Das Wasserabscheideelement weist vorzugsweise ein Partikelfiltermedium auf, das an einem Mittelrohr abgestützt ist. Das Wasserabscheideelement ist in diesem Fall in Form eines Filterelements ausgebildet.

Das Wasserabscheideelement kann zum Wasserabscheiden eine Sedimentationsöffnung aufweisen. Die Sedimentationsöffnung ist bevorzugt an einer Endscheibe des Wasserabscheideelements ausgebildet. Besonders bevorzugt ist die Sedimentationsöffnung dabei in Form eines Sedimentationsspalts ausgebildet.

Die Wasserabscheidung erfolgt mit besonders hohem Wirkungsgrad, wenn das Wasserabscheideelement ein Koaleszermedium, insbesondere in Form eines Vlieses, aufweist.

Das Wasserabscheideelement weist weiterhin zum Wasserabscheiden ein Endabscheidersieb auf, wobei das Endabscheidersieb in einem Siebträger angeordnet oder ausgebildet ist, wobei der Siebträger radial zur Wasserabscheideelementlängsachse angeordnet oder ausgebildet ist. Durch das Endabscheidersieb wird die Wasserabscheiderate signifikant erhöht.

Eine erste Kontaktelektrode kann radial zur Wasserabscheideelementlängsachse ringförmig ausgebildet sein.

Bevorzugt sind beide Kontaktelektroden radial zur Wasserabscheideelementlängsachse ringförmig ausgebildet. Durch die ringförmig ausgebildeten Kontaktelektroden kann der Siebträger praktisch beliebig um die Wasserabscheideelementlängsachse gedreht montiert werden, wobei in jedem Fall die elektrische Verbindung mit den Wasserstandselektroden gewahrt wird.

Gemäß einer nicht erfindungsgemäßen Ausführungsform können die Wasserstandselektroden jeweils einteilig bzw. einstückig mit den Kontaktelektroden ausgebildet sein. Hierdurch kann die elektrische Verbindung zwischen den Wasserstandselektroden und den Kontaktelektroden sicher gewahrt werden.

Die Kontaktelektroden können zumindest teilweise auf einer Endplatte des Wasserabscheideelements angeordnet oder ausgebildet sein. Hierdurch können die Kontaktelektroden leicht durch am Filtergehäuse angeordnete Abgriffelektroden kontaktiert werden.

Zumindest eine Verbindungsleitung zwischen einer Wasserstandselektrode und einer Kontaktelektrode kann im Siebträger verlaufen. Alternativ oder zusätzlich dazu kann eine Verbindungsleitung in einem Mittelrohr verlaufen.

Vorzugsweise ist eine erste Wasserstandselektrode über eine elektrische Verbindungsleitung mit einer bezüglich der Wasserabscheideelementlängsachse außenliegenden ersten Kontaktelektrode und eine zweite Wasserstandselektrode mit einer bezüglich der Wasserabscheideelementlängsachse innenliegenden zweiten Kontaktelektrode verbunden, wobei die Verbindungsleitung zumindest teilweise in der Endplatte eingebettet zwischen der zweiten Kontaktelektrode und einer Unterseite der Endplatte verläuft. Hierdurch können die Wasserstandselektroden im Wesentlichen den gleichen Abstand zur Wasserabscheideelementlängsachse aufweisen, ohne dass es zu einem Kurzschluss zwischen den Wasserstandselektroden kommt. Die Endplatte dient dabei abschnittsweise als Isolator zwischen der zweiten Kontaktelektrode und der Verbindungsleitung.

Der Siebträger ist und das Mittelrohr kann über eine Rastverbindung mit der Endplatte des Wasserabscheideelements verbunden sein, wobei die Wasserstandselektroden bei an der Endplatte verrastetem Siebträger jeweils über einen unterbrechbaren federelastischen Kontakt mit den Kontaktelektroden elektrisch verbunden sind. Der Siebträger bzw. das Mittelrohr ist dabei aufgrund der Rastverbindung besonders leicht montierbar.

In weiterer bevorzugter Ausgestaltung der Erfindung sind die Kontaktelektroden in einem Innenraum des Siebträgers angeordnet oder ausgebildet, wobei die Kontaktelektroden jeweils durch eine zumindest teilweise federelastisch ausgebildete Abgriffelektrode kontaktierbar sind und die Abgriffelektroden zumindest abschnittsweise radial nach außen gerichtet an einem Mittelrohrelement des Filters angeordnet oder ausgebildet sind. Durch eine solche Anordnung wird ein besonders montagefreundliches Wasserabscheideelement erzielt, wobei die elektrische Verbindung von den "unten" am Siebträger angeordneten oder ausgebildeten Wasserstandselektroden über die Abgriffelektroden und weiter über das Mittelrohrelement "nach oben" geführt wird.

Besonders bevorzugt ist der Siebträger dabei an seiner zu den Wasserstandselektroden hin weisenden Unterseite im Bereich des Mittelrohrelements geschlossen ausgebildet. Bevorzugt ist dabei der untere Teil des Innenraums des Siebträgers, d.h. der zum Wassersammelraum hin ausrichtbare Teil des Innenraums des Siebträgers, geschlossen ausgebildet. Hierdurch kann auf eine Abdichtung zwischen Mittelrohrelement und Siebträger, insbesondere auf die Montage eines Dichtrings zwischen Mittelrohrelement und Siebträger, verzichtet werden.

Ein besonders kompakter und einfach montierbarer Aufbau des Wasserabscheideelements kann erreicht werden, wenn das Partikelfiltermedium, das Koaleszermedium, die Sedimentationsöffnung und der Endabscheidersieb nacheinander radial zur Wasserabscheideelementlängsachse angeordnet sind.

In weiterer Ausgestaltung der Erfindung kann das Wasserabscheideelement eine elektrisch leitfähige Kurzschlussbrücke zur elektrischen Überbrückung von zumindest zwei an einer Innenseite des Filtergehäuses angeordneten oder ausgebildeten Filtergehäuseelektroden aufweisen. Durch die elektrisch leitfähige Kurzschlussbrücke kann ein korrekter Einbau des Wasserabscheideelements in ein Filtergehäuse sichergestellt werden. Weiterhin kann durch eine solche Kurzschlussbrücke sichergestellt werden, dass nur Original-Wasserabscheideelemente in das Filtergehäuse eingesetzt werden, wodurch Motorschäden aufgrund von mangelhaften nachgebauten Wasserabscheideelementen vermieden werden.

Die Erfindung betrifft weiterhin einen Filter mit einem zuvor beschriebenen Wasserabscheideelement und einem Filtergehäuse, das einen Wassersammelraum aufweist, wobei die Wasserstandselektroden bei in das Filtergehäuse eingebrachtem Wasserabscheideelement zumindest teilweise in den Wassersammelraum ragen.

### Kurze Beschreibung der Zeichnungen

Weitere Merkmale und Vorteile der Erfindung ergeben sich aus der nachfolgenden detaillierten Beschreibung mehrerer Ausführungsbeispiele der Erfindung, anhand der Figuren der Zeichnung, die erfindungswesentliche Einzelheiten zeigt sowie aus den Ansprüchen.

Die in der Zeichnung dargestellten Merkmale sind derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein. Es zeigen:
Fig. 1a : eine geschnittene perspektivische Ansicht eines ersten Wasserabscheideelements in einem stark schematisierten ersten Filtergehäuse;
Fig. 1b : eine Teilansicht der linken Seite des ersten Wasserabscheideelements aus Fig. 1a ;
Fig. 1c : eine Teilansicht der rechten Seite des ersten Wasserabscheideelements aus Fig. 1a ;
Fig. 2 : eine geschnittene Ansicht eines zweiten Wasserabscheideelements gemäß einer Ausführungsform, die hilfreich ist zum Verständnis der Erfindung;
Fig. 3a : Siebträger und Mittelrohrelement eines dritten Wasserabscheideelements gemäß einer Ausführungsform, die hilfreich ist zum Verständnis der Erfindung;
Fig. 3b : das Mittelrohrelement aus Fig. 3a ohne Siebträger gemäß einer Ausführungsform, die hilfreich ist zum Verständnis der Erfindung;
Fig. 3c : eine geschnittene Teilansicht des dritten Wasserabscheideelements aus Fig. 3a gemäß einer Ausführungsform, die hilfreich ist zum Verständnis der Erfindung;
Fig. 4a : eine perspektivische Ansicht eines vierten Wasserabscheideelements;
Fig. 4b : eine Draufsicht auf ein zweites Filtergehäuse zur Aufnahme des vierten Wasserabscheideelements aus Fig. 4a ;
Fig. 4c : eine geschnittene Teilansicht des zweiten Filtergehäuses gemäß Fig. 4b mit darin eingesetztem vierten Wasserabscheideelement gemäß Fig. 4a ;
Fig. 5a : eine perspektivische Ansicht eines fünften Wasserabscheideelements;
Fig. 5b : eine geschnittene Teilansicht des fünften Wasserabscheideelements gemäß Fig. 5a in einem dritten Filtergehäuse;
Fig. 6a : eine perspektivische Ansicht eines sechsten Wasserabscheideelements;
Fig. 6b : eine perspektivische Ansicht eines vierten Filtergehäuses zur Aufnahme des sechsten Wasserabscheideelements aus Fig. 6a ;
Fig. 6c : eine geschnittene Teilansicht des vierten Filtergehäuses gemäß Fig. 6b mit darin eingesetztem sechsten Wasserabscheideelement gemäß Fig. 6a ;
Fig. 7a : eine perspektivische Ansicht eines siebten Wasserabscheideelements;
Fig. 7b : eine perspektivische Ansicht eines fünften Filtergehäuses zur Aufnahme des siebten Wasserabscheideelements aus Fig. 7a ;
Fig. 7c : eine geschnittene Teilansicht des fünften Filtergehäuses gemäß Fig. 7b mit darin eingesetztem siebten Wasserabscheideelement gemäß Fig. 7a ;
Fig. 8 : eine Draufsicht auf ein achtes Wasserabscheideelement; und
Fig. 9 : eine Draufsicht auf ein neuntes Wasserabscheideelement.

### Ausführungsformen der Erfindung

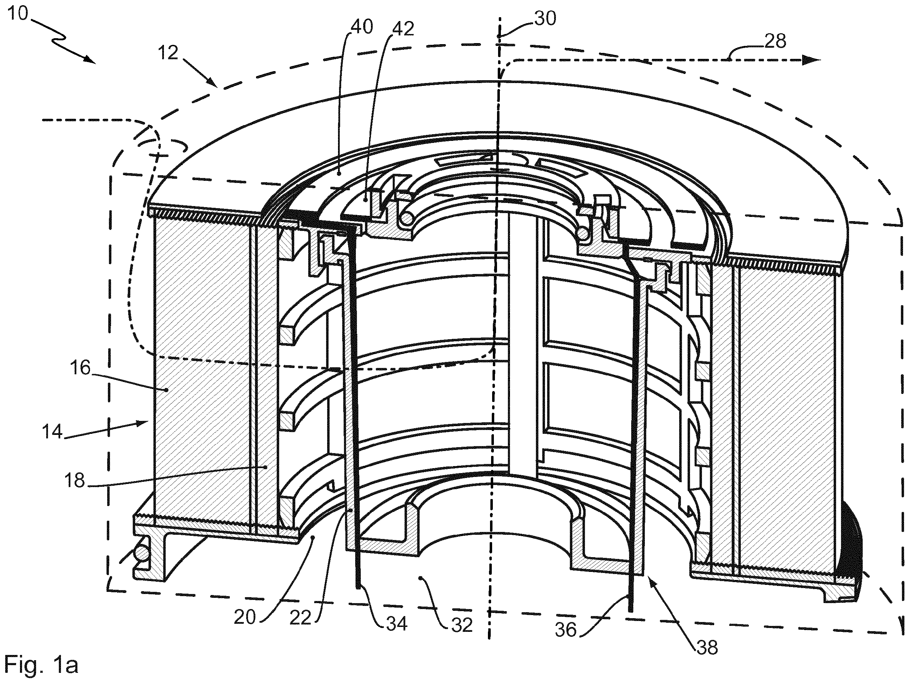

Fig. 1a zeigt einen ersten Filter 10 in Form eines Kraftstofffilters eines Kraftfahrzeuges (nicht gezeigt) mit einem lediglich schematisch durch gestrichelte Linien dargestellten ersten Filtergehäuse 12. In das erste Filtergehäuse 12 ist ein erstes Wasserabscheideelement 14 eingesetzt.

Das erste Wasserabscheideelement 14 weist ein Partikelfiltermedium 16, ein Koaleszermedium 18, eine Sedimentationsöffnung 20 und ein Endabscheidersieb 22 auf. Aus Gründen der Übersichtlichkeit sind in Fig. 1a nur die Stirnflächen des Endabscheidersiebes 22 gezeigt. Ein strichpunktiert dargestellter Pfeil 28 zeigt den Weg des Kraftstoffs durch das Partikelfiltermedium 16, das Koaleszermedium 18, die Sedimentationsöffnung 20 und das Endabscheidersieb 22. Dabei wird ersichtlich, dass das Partikelfiltermedium 16, das Koaleszermedium 18, die Sedimentationsöffnung 20 und das Endabscheidersieb 22 radial zu einer Wasserabscheideelementlängsachse 30 angeordnet sind. Das erste Wasserabscheideelement 14 ist im Wesentlichen axialsymmetrisch zur Wasserabscheideelementlängsachse 30 ausgebildet.

Durch das Koaleszermedium 18, die Sedimentationsöffnung 20 und das Endabscheidersieb 22 kann der Kraftstoff effektiv von Wasser befreit werden, um einen Motorschaden zu vermeiden. Das abgeschiedene Wasser sammelt sich in einem Wassersammelraum 32 des ersten Filtergehäuses 12. Ein zu hoher Wasserstand im Wassersammelraum 32 wird durch Wasserstandselektroden 34, 36 detektiert. Die Wasserstandselektroden 34, 36 sowie der Endabscheidersieb sind an einem Siebträger 38 angeordnet. Die Wasserstandselektroden 34, 36 sind über Kontaktelektroden 40, 42 elektrisch kontaktierbar. Eine besonders leichte Kontaktierung der Kontaktelektroden 40, 42 sowie eine einfache Montage des ersten Wasserabscheideelements 14 wird durch eine ringförmige Ausbildung der Kontaktelektroden 40, 42 erreicht: Durch die ringförmige Ausbildung der Kontaktelektroden 40, 42 kann das erste Wasserabscheideelement 14 beliebig um die Wasserabscheideelementlängsachse 30 gedreht in das erste Filtergehäuse 12 eingesetzt und trotzdem stets korrekt kontaktiert werden. Da bei einem Wechsel des Wasserabscheideelements 14 die Wasserstandselektroden 34, 36 mit ausgetauscht und somit erneuert werden, kann die Wasserdetektion stets zuverlässig erfolgen.

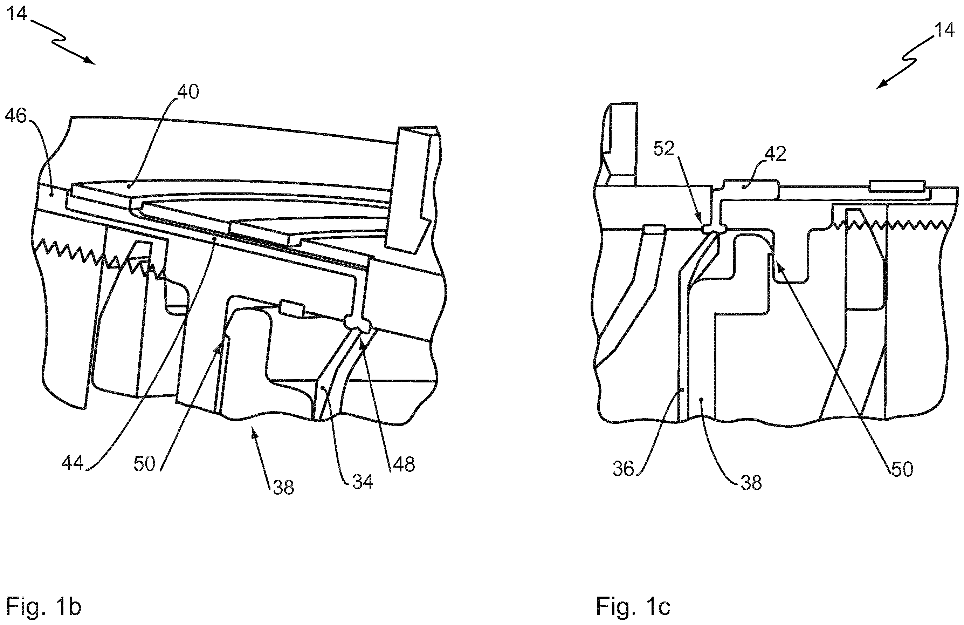

Fig. 1b zeigt eine Teilansicht des ersten Wasserabscheideelements 14. Aus Fig. 1b wird ersichtlich, dass die radial äußere, erste Kontaktelektrode 40 über eine elektrische Verbindungsleitung 44 mit der ersten Wasserstandselektrode 34 elektrisch verbunden ist. Die Verbindungsleitung 44 verläuft eingebettet in einer Endplatte 46 des ersten Wasserabscheideelements 14. Die erste Kontaktelektrode 40 und die elektrische Verbindungsleitung 44 sind einteilig ausgebildet. Weiterhin können die Verbindungsleitung 44 und die erste Wasserstandselektrode 34 einteilig ausgebildet sein. Im vorliegenden Fall sind die Verbindungsleitung 44 und die erste Wasserstandselektrode 34 über einen ersten federelastischen Kontakt 48 elektrisch verbunden. Der Siebträger 38 ist über eine Rastverbindung 50 mit der Endplatte 46 des ersten Wasserabscheideelements 14 verbindbar. Hierdurch kann der Siebträger 38 besonders leicht montiert werden. Beim Montieren des Siebträgers 38 wird gleichzeitig durch den ersten federelastischen Kontakt 48 eine elektrisch leitende Verbindung zwischen der ersten Wasserstandselektrode 34 und der ersten Kontaktelektrode 40 hergestellt.

Fig. 1c zeigt eine weitere Teilansicht des ersten Wasserabscheideelements 14. Aus Fig. 1c wird ersichtlich, dass die radial innere, zweite Kontaktelektrode 42 über einen zweiten federelastischen Kontakt 52 mit der zweiten Wasserstandselektrode 36 elektrisch verbunden ist. Beim Montieren des Siebträgers 38 über die Rastverbindung 50 wird gleichzeitig durch den zweiten federelastischen Kontakt 52 eine elektrisch leitende Verbindung zwischen der zweiten Wasserstandselektrode 36 und der zweiten Kontaktelektrode 42 hergestellt.

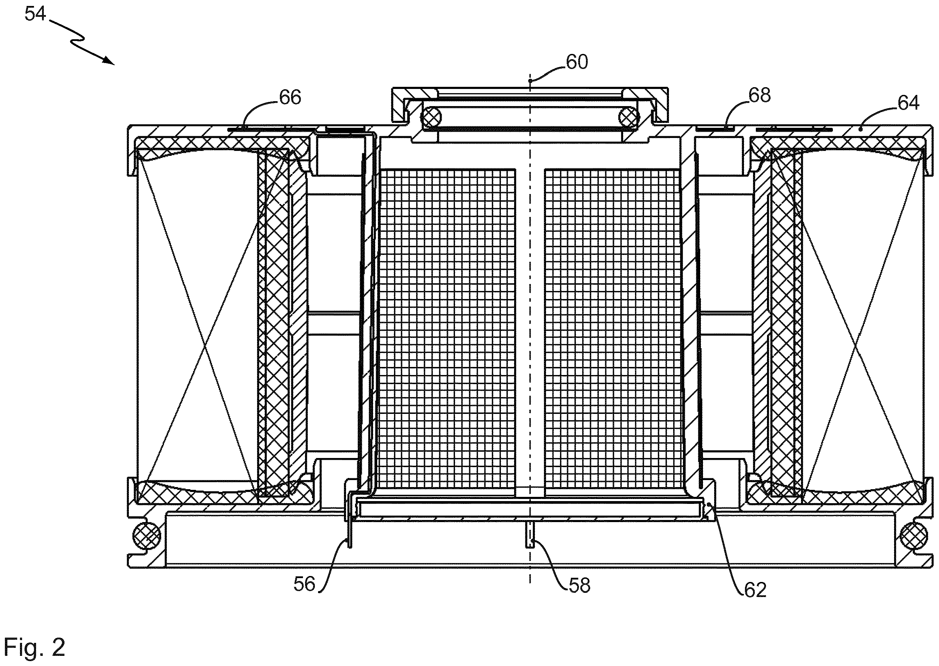

Fig. 2 zeigt ein zweites Wasserabscheideelement 54. Das zweite Wasserabscheideelement 54 ist identisch zu dem ersten Wasserabscheideelement 14. Allerdings sind Wasserstandselektroden 56, 58 nicht diametral wie die Wasserstandselektroden 34, 36 (siehe Fig. 1a), sondern im rechten Winkel um eine Wasserabscheideelementlängsachse 60 beabstandet. Weiterhin ist ein Siebträger 62 einteilig mit einer Endplatte 64, die erste Wasserstandselektrode 56 einteilig mit einer ersten Kontaktelektrode 66 und die zweite Wasserstandselektrode 58 einteilig mit einer zweiten Kontaktelektrode 68 ausgebildet.

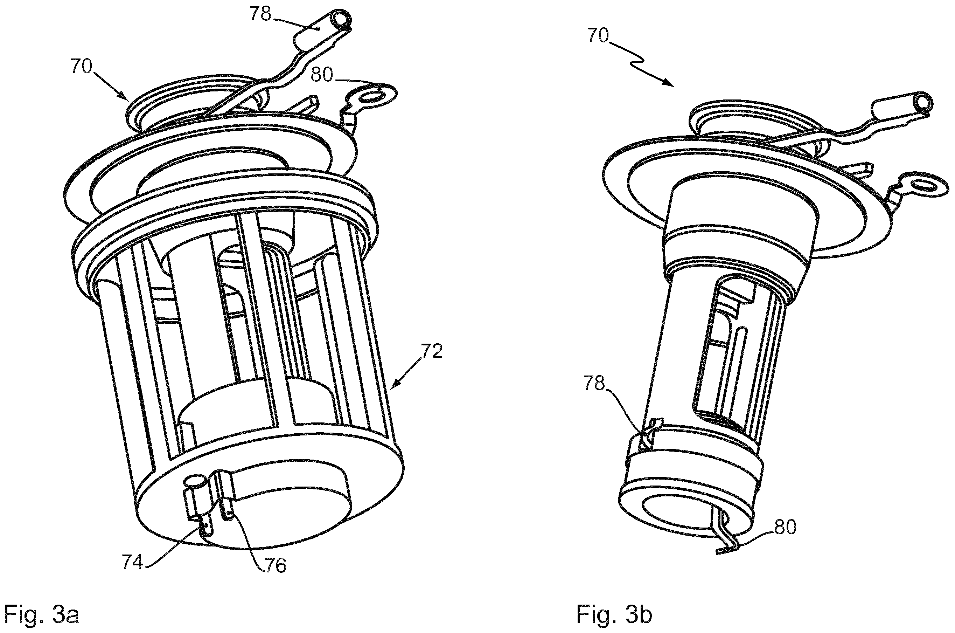

Fig. 3a zeigt ein Mittelrohrelement 70 eines Kraftstofffilters und einen Siebträger 72 eines dritten Wasserabscheideelements. Das Mittelrohrelement 70 ist kein Teil eines Wasserabscheideelements. Der Siebträger 72 weist Wasserstandselektroden 74, 76 auf. Die Wasserstandselektroden 74, 76 sind elektrisch jeweils mit Abgriffelektroden 78, 80 verbunden. Der Siebträger 72 weist weiterhin an seinem Außenumfang ein Endabscheidersieb auf, das aus Gründen der Übersichtlichkeit jedoch nicht dargestellt ist.

Fig. 3b zeigt das Mittelrohrelement 70. Aus Fig. 3b wird ersichtlich, dass die Abgriffelektroden 78, 80 einenends abschnittsweise federelastisch ausgebildet sind. Die Abgriffelektroden 78, 80 dienen der Herstellung einer elektrischen Verbindung zu den Wasserstandselektroden 74, 76 (siehe Fig. 3a).

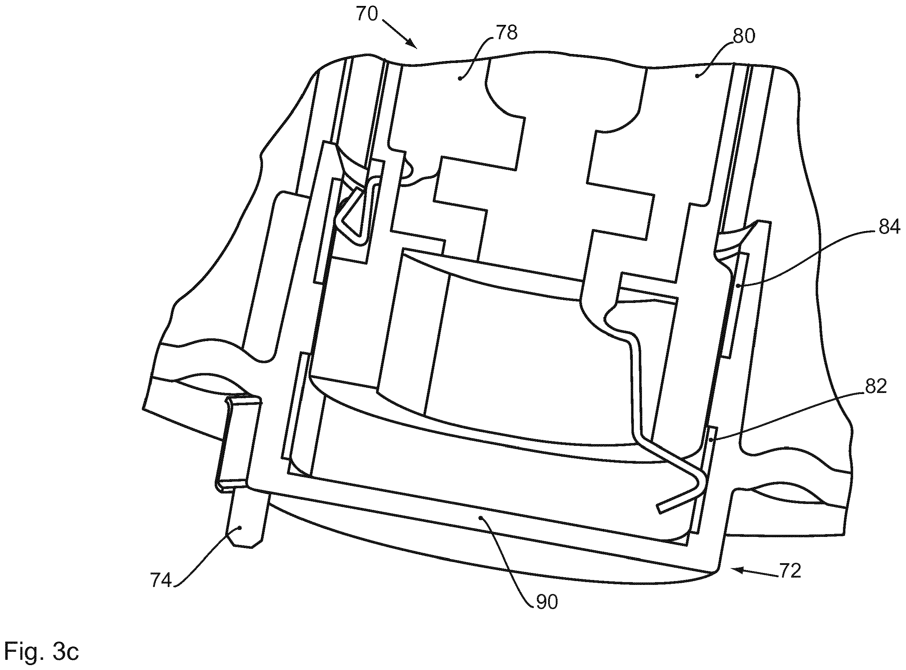

Fig. 3c zeigt die Herstellung dieser elektrischen Verbindung in einer teilweise geschnittenen Ansicht des Mittelrohrelements 70 und des Siebträgers 72 gemäß Fig. 3a. Die Wasserstandselektroden 74, 76 (von denen in Fig. 3c lediglich die erste Wasserstandselektrode 74 dargestellt ist) sind jeweils elektrisch mit ringförmigen Kontaktelektroden 82, 84 verbunden. Die Wasserstandselektroden 74, 76 (siehe Fig. 3a) sind dabei jeweils einteilig mit den Kontaktelektroden 82, 84 ausgebildet. Die Kontaktelektroden 82, 84 werden jeweils durch die zumindest teilweise federelastisch ausgebildeten Abgriffelektroden 78, 80 kontaktiert, die abschnittsweise radial nach außen gerichtet am Mittelrohrelement 70 angeordnet sind und mit ihrem federelastisch ausgebildeten Abschnitt gegen die Kontaktelektroden 82, 84 pressen.

Der Siebträger 72 ist an seiner zu den Wasserstandselektroden 74, 76 (siehe Fig. 3a) hin weisenden Unterseite 90 im Bereich des Mittelrohrelements 70 geschlossen ausgebildet. Hierdurch kann auf eine Dichtung, insbesondere einen Dichtring, zwischen dem Mittelrohrelement und dem Siebträger verzichtet werden.

Nachfolgend werden die äußeren Ausgestaltungen weiterer erfindungsgemäßer Wasserabscheideelemente beschrieben, die an ihrer Außenseite zusätzlich elektrisch leitfähige Kurzschlussbrücken zur elektrischen Überbrückung von zumindest zwei an einer Innenseite des Filtergehäuses angeordneten oder ausgebildeten Filtergehäuseelektroden aufweisen.

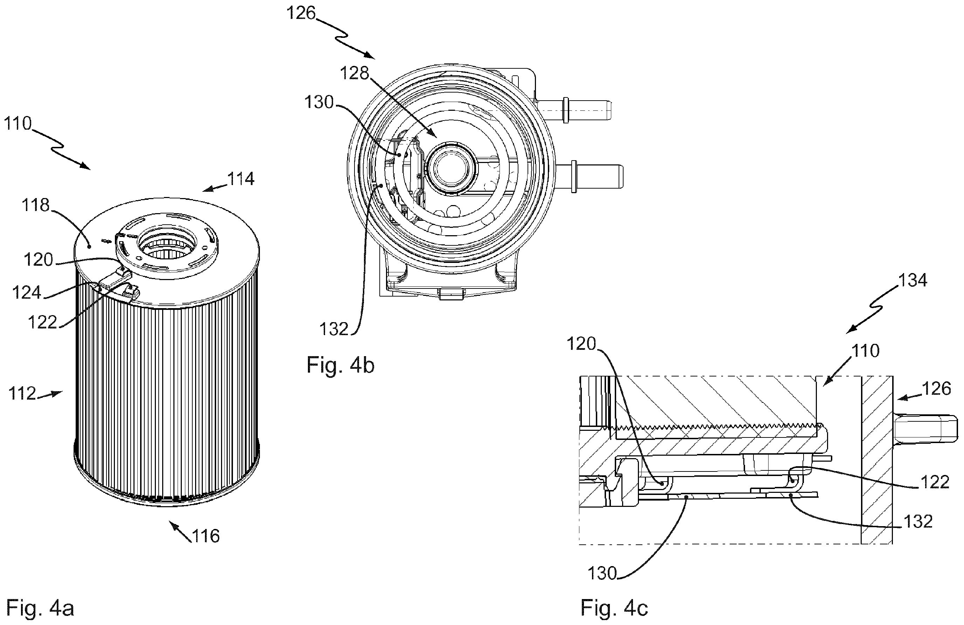

Fig. 4a zeigt ein viertes Wasserabscheideelement 110. Das vierte Wasserabscheideelement 110 weist ein Partikelfiltermedium 112 auf. Das Partikelfiltermedium 112 ist als Faltenfilter ausgebildet. Das Partikelfiltermedium 112 ist durch eine erste Endplatte 114 und eine zweite Endplatte 116 eingefasst.

An der nach außen weisenden Oberfläche 118 der ersten Endplatte 114 ist eine erste Wasserabscheideelementelektrode 120 und eine zweite Wasserabscheideelementelektrode 122 angeordnet. Die erste Wasserabscheideelementelektrode 120 ist mit der zweiten Wasserabscheideelementelektrode 122 mittels einer Kurzschlussbrücke 124 in Form eines elektrischen Leiters verbunden. Der elektrische Leiter ist im vorliegenden Fall in Form eines Metallstreifens ausgebildet.

Fig. 4b zeigt ein zweites Filtergehäuse 126 zur Aufnahme des vierten Wasserabscheideelements 110 gemäß Fig. 4a. Das zweite Filtergehäuse 126 weist eine Filtergehäuseinnenseite 128 auf. Die Filtergehäuseinnenseite 128 ist dem vierten Wasserabscheideelement 110 zugewandt, wenn das vierte Wasserabscheideelement 110 in das zweite Filtergehäuse 126 eingesetzt ist.

An der Filtergehäuseinnenseite 128 sind eine erste Filtergehäuseelektrode 130 und eine zweite Filtergehäuseelektrode 132 angeordnet. Die erste Filtergehäuseelektrode 130 ist radialsymmetrisch zur Längsachse des zweiten Filtergehäuses 126 ausgebildet. Weiterhin ist die zweite Filtergehäuseelektrode 132 radialsymmetrisch zur Längsachse des zweiten Filtergehäuses 126 ausgebildet. Die zweite Filtergehäuseelektrode 132 ist dabei konzentrisch zur ersten Filtergehäuseelektrode 130 ausgebildet. Mit anderen Worten sind die erste Filtergehäuseelektrode 130 und die zweite Filtergehäuseelektrode 132 im Wesentlichen reifenförmig bzw. ringförmig mit gemeinsamem Mittelpunkt ausgebildet. Die erste Filtergehäuseelektrode 130 besteht aus einem elektrisch leitfähigen Material, vorzugsweise aus Metall. Weiterhin besteht die zweite Filtergehäuseelektrode 132 aus einem elektrisch leitfähigen Material, vorzugsweise aus Metall.

Fig. 4c zeigt einen zweiten Filter 134. Der zweite Filter 134 weist das zweite Filtergehäuse 126 mit darin - im Vergleich zu Fig. 4a "kopfüber" dargestellten - vierten Wasserabscheideelement 110 auf. Unter dem Ausdruck "kopfüber" wird eine Drehung um 180° verstanden, wobei die Drehachse bei dieser Drehung senkrecht zur Längsachse des vierten Wasserabscheideelements 110 verläuft. Wie aus Fig. 1c ersichtlich ist, sind die erste Wasserabscheideelementelektrode 120 und die zweite Wasserabscheideelementelektrode 122 abschnittsweise bogenförmig ausgebildet. Die erste Wasserabscheideelementelektrode 120 und die zweite Wasserabscheideelementelektrode 122 weisen dadurch federelastische Eigenschaften auf. Die erste Wasserabscheideelementelektrode 120 steht bei in das zweite Filtergehäuse 126 eingebautem vierten Wasserabscheideelement 110 in elektrischem und mechanischem Kontakt mit der ersten Filtergehäuseelektrode 130. Die zweite Wasserabscheideelementelektrode 122 steht bei in das zweite Filtergehäuse 126 eingebauten vierten Wasserabscheideelement 110 in elektrischem und mechanischem Kontakt mit der zweiten Filtergehäuseelektrode 132.

Zwischen der ersten Filtergehäuseelektrode 130 und der zweiten Filtergehäuseelektrode 132 kann eine Spannung angelegt werden. Dann fließt ein Strom von der ersten Filtergehäuseelektrode 130 zur ersten Wasserabscheideelementelektrode 120, über die Kurzschlussbrücke 124 (siehe Fig. 1a) zur zweiten Wasserabscheideelementelektrode 122 und weiter zur zweiten Filtergehäuseelektrode 132. Je nach Polarität der angelegten Spannung kann der Strom auch in die Gegenrichtung fließen. Nur wenn das vierte Wasserabscheideelement 110 korrekt in das zweite Filtergehäuse 126 eingebaut ist, kommt der Stromfluss zustande. Durch eine Messung des Stromflusses kann somit auf den korrekten Einbau des vierten Wasserabscheideelements 110 in das zweite Filtergehäuse 126 geschlossen werden.

Der zuvor beschriebene Stromkreis kann weiterhin einen bekannten Widerstand aufweisen. Durch Messung dieses Widerstandes kann leicht beurteilt werden, ob es sich bei dem vierten Wasserabscheideelement 110 um ein Originalteil oder eine Nachahmung handelt. Weiterhin kann der zuvor beschriebene Stromkreis eine bekannte Kapazität und/oder Induktivität aufweisen. Durch Anlegen einer Wechselspannung zwischen der ersten Filtergehäuseelektrode 130 und der zweiten Filtergehäuseelektrode 132 sowie einer Messung des resultierenden Stroms kann besonders präzise beurteilt werden, ob es sich um ein nachgeahmtes viertes Wasserabscheideelement 110 handelt.

Wird von einer Steuerung (nicht gezeigt) detektiert, dass eine Nachahmung vorliegt oder das vierte Wasserabscheideelement 110 nicht korrekt in das zweite Filtergehäuse 126 installiert ist, so kann dies einem Benutzer optisch oder akustisch angezeigt werden. Wird der zweite Filter 134 in einem Kraftfahrzeug eingesetzt, so kann die Motorsteuerung unterbrochen werden, um eine Beschädigung des Kraftfahrzeuges zu verhindern.

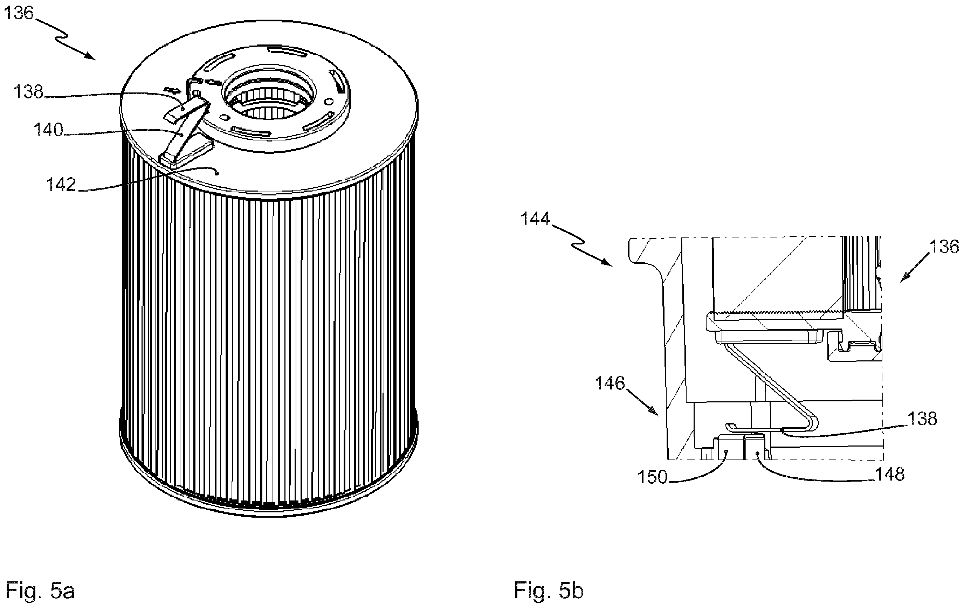

Fig. 5a zeigt ein fünftes Wasserabscheideelement 136. Das fünfte Wasserabscheideelement 136 entspricht dem vierten Wasserabscheideelement 110 gemäß Fig. 4a. Im Gegensatz zu dem vierten Wasserabscheideelement 110 weist das fünfte Wasserabscheideelement 136 eine Kurzschlussbrücke 138 auf, die sowohl die erste Wasserabscheideelementelektrode als auch die zweite Wasserabscheideelementelektrode umfasst, wobei die Wasserabscheideelementelektroden über einen elektrischen Leiter verbunden sind. Die erste Wasserabscheideelementelektrode, die zweite Wasserabscheideelementelektrode stellen dabei verschiedene Abschnitte der Kurzschlussbrücke 138 dar. Die Kurzschlussbrücke 138 ist über ein elastisches Wasserabscheideelementteil 140 mit einem Wasserabscheideelementkörper 142 des fünften Wasserabscheideelements 136 verbunden. Die Kurzschlussbrücke 138 ist aus einem elektrisch leitfähigen Material, vorzugsweise aus Metall, ausgebildet.

Fig. 5b zeigt einen dritten Filter 144. Der dritte Filter 144 weist das fünfte Wasserabscheideelement 136 auf, das - im Vergleich zu Fig. 4a "kopfüber" dargestellt - in ein drittes Filtergehäuse 146 eingebaut ist. Das dritte Filtergehäuse 146 weist eine erste Filtergehäuseelektrode 148 und eine zweite Filtergehäuseelektrode 150 auf. Zwischen der ersten Filtergehäuseelektrode 148 und der zweiten Filtergehäuseelektrode 150 kann eine Spannung angelegt werden. Die Filtergehäuseelektroden 148, 150 werden in eingebautem Zustand des fünften Wasserabscheideelements 136 in das dritte Filtergehäuse 146 durch die elektrisch verbundenen Wasserabscheideelementelektroden der Kurzschlussbrücke 138 elektrisch überbrückt. Hierdurch kann der korrekte Sitz des fünften Wasserabscheideelements 136 im dritten Filtergehäuse 146 überprüft werden. Weiterhin kann überprüft werden, ob es sich bei dem fünften Wasserabscheideelement 136 um einen Nachbau handelt.

Die Filtergehäuseelektroden 148, 150 können radialsymmetrisch zur Längsachse des dritten Filtergehäuses 146 ausgebildet sein, um das fünfte Wasserabscheideelement 136 beliebig um dessen Längsachse gedreht in das dritte Filtergehäuse 146 einsetzen zu können.

Die erste Filtergehäuseelektrode 148 und/oder die zweite Filtergehäuseelektrode 150 können in Form einer elektrisch leitfähigen Platte, insbesondere einer Metallplatte, ausgebildet sein.

Alternativ zu dem dritten Filtergehäuse 146 kann das zweite Filtergehäuse 126 gemäß Fig. 4b in Kombination mit dem fünften Wasserabscheideelement 136 gemäß Fig. 5a eingesetzt werden.

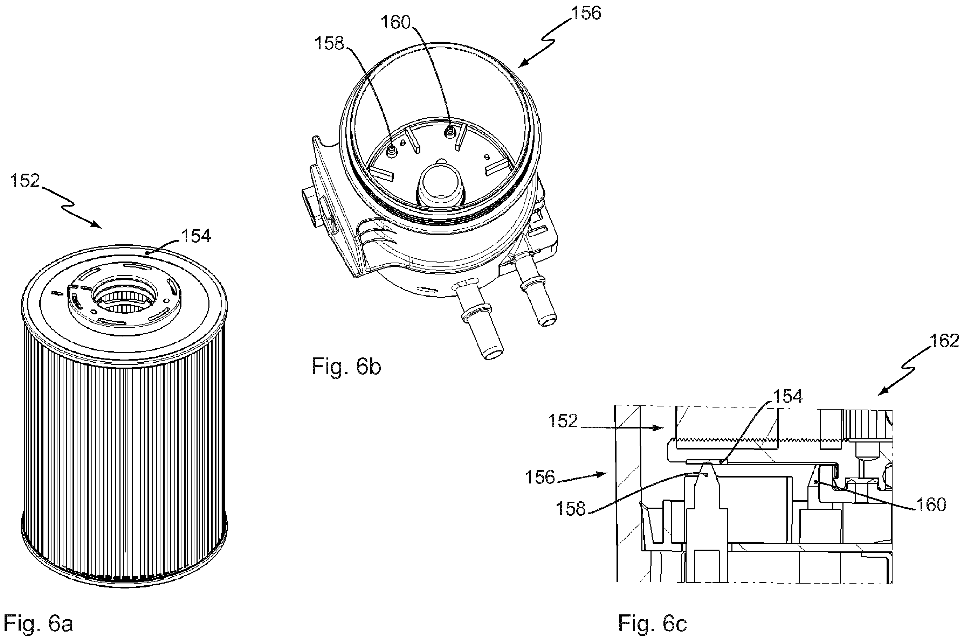

Fig. 6a zeigt ein sechstes Wasserabscheideelement 152. Das sechste Wasserabscheideelement 152 entspricht dem fünften Wasserabscheideelement 136 gemäß Fig. 5a. Im Gegensatz zu dem fünften Wasserabscheideelement 136 weist das sechste Wasserabscheideelement 152 eine Kurzschlussbrücke 154 in Form eines Rings auf.

Fig. 6b zeigt ein viertes Filtergehäuse 156. Das vierte Filtergehäuse 156 weist eine erste Filtergehäuseelektrode 158 und eine zweite Filtergehäuseelektrode 160 auf.

Fig. 6c zeigt einen vierten Filter 162. Der vierte Filter 162 weist das vierte Filtergehäuse 156 gemäß Fig. 6b auf. Das sechste Wasserabscheideelement 152 (gemäß Fig. 6a) des vierten Filters 162 ist "kopfüber" im vierten Filtergehäuse 156 dargestellt. Die erste Filtergehäuseelektrode 158 wird mit der zweiten Filtergehäuseelektrode 160 über die Kurzschlussbrücke 154 elektrisch kurzgeschlossen. Die Filtergehäuseelektroden 158, 160 sind in Form von Federstiften ausgebildet. Die Federstifte weisen elastische Filtergehäuseteile (nicht gezeigt) auf. Durch die Federstifte wird ein besonders zuverlässiger elektrischer Kontakt erzielt.

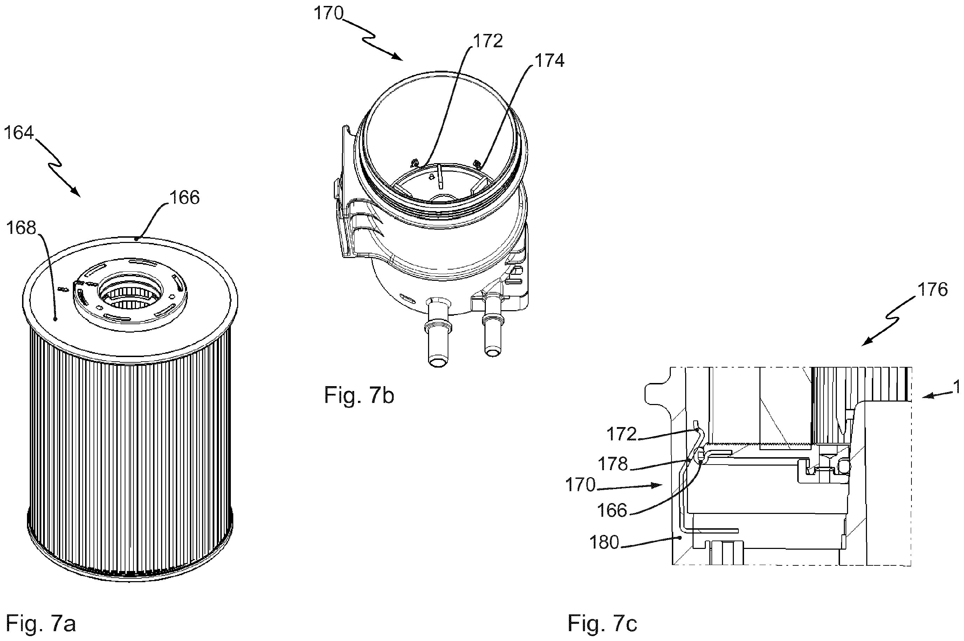

Fig. 7a zeigt ein siebtes Wasserabscheideelement 164. Das siebte Wasserabscheideelement 164 entspricht dem sechsten Wasserabscheideelement 152 gemäß Fig. 6a. Im Gegensatz zu dem sechsten Wasserabscheideelement 152 weist das siebte Wasserabscheideelement 164 einen ersten Wasserabscheideelementelektrodenring 166 auf, der eine Endplatte 168 des siebten Wasserabscheideelements 164 ringförmig an deren Außenumfang umgibt. Der Wasserabscheideelementelektrodenring 166 umfasst in unterschiedlichen Abschnitten eine erste Wasserabscheideelementelektrode, eine zweite Wasserabscheideelementelektrode und eine unmittelbare elektrische Verbindung in Form einer Kurzschlussbrücke zwischen diesen Wasserabscheideelementelektroden.

Fig. 7b zeigt ein fünftes Filtergehäuse 170. Das fünfte Filtergehäuse 170 weist eine erste Filtergehäuseelektrode 172 und eine zweite Filtergehäuseelektrode 174 auf.

Fig. 7c zeigt einen fünften Filter 176. Der fünfte Filter 176 umfasst das fünfte Filtergehäuse 170 gemäß Fig. 7b und das siebte Wasserabscheideelement 164 gemäß Fig. 7a. Das siebte Wasserabscheideelement 164 ist "kopfüber" im fünften Filtergehäuse 170 dargestellt. Im installierten Zustand überbrückt der Wasserabscheideelementelektrodenring 166 die Filtergehäuseelektroden 172, 174 (siehe Fig. 7b; in Fig. 7c ist lediglich die erste Filtergehäuseelektrode 172 sichtbar). Aus Fig. 7c wird ersichtlich, dass die erste Filtergehäuseelektrode 172 über ein elastisches Filtergehäuseteil 178 mit einem Filtergehäusekörper 180 des fünften Filtergehäuses 176 verbunden ist. Die elektrische Verbindung zwischen den Filtergehäuseelektroden 172, 174 und den Wasserabscheideelementelektroden des Wasserabscheideelementelektrodenrings 166 bleibt dadurch auch nach mehrmaligem Ein- und Ausbau des siebten Wasserabscheideelements 164 erhalten. Auch die zweite Filtergehäuseelektrode (nicht gezeigt) ist über ein elastisches Filtergehäuseteil (nicht gezeigt) mit dem Filtergehäusekörper 180 des fünften Filtergehäuses 176 verbunden.

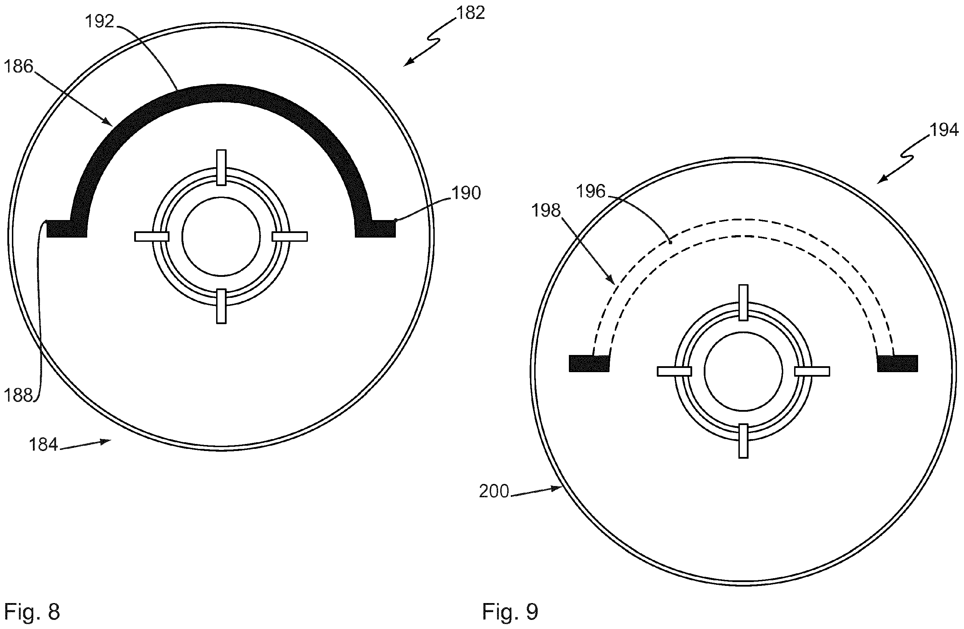

Fig. 8 zeigt ein achtes Wasserabscheideelement 182. Das achte Wasserabscheideelement 182 weist eine Endplatte 184 auf. Auf der Endplatte 184 ist eine Kurzschlussbrücke in Form eines Kontaktstreifens 186 aus Metall ausgebildet. Der Kontaktstreifen 186 kann beispielsweise in Form einer Metallfolie vorliegen. Der Kontaktstreifen 186 weist eine erste Wasserabscheideelementelektrode 188 und eine zweite Wasserabscheideelementelektrode 190 auf. Die Wasserabscheideelementelektroden 188, 190 sind über einen ohmschen Leiter 192 unmittelbar elektrisch verbunden. Der ohmsche Leiter 192 ist in Form eines Abschnittes des Kontaktstreifens 186 ausgebildet.

Fig. 9 zeigt ein neuntes Wasserabscheideelement 194. Das neunte Wasserabscheideelement 194 entspricht dem achten Wasserabscheideelement 182. Allerdings ist ein als ohmscher Leiter 196 ausgebildeter Abschnitt eines Kontaktstreifens 198 vom Kunststoff einer Endplatte 200 verdeckt in der Endplatte 200 eingelassen. Hierdurch ist der ohmsche Leiter 196 weniger anfällig für Beschädigungen.

Zusammenfassend betrifft die Erfindung bevorzugt ein mehrstufiges Wasserabscheideelement. Das Wasserabscheideelement weist dabei vorzugsweise ein Partikelfiltermedium, ein Koaleszermedium, eine Sedimentationsöffnung und einen Siebträger mit einem Endabscheidersieb auf. An dem Siebträger sind bevorzugt zwei Wasserstandselektroden angeordnet. Die Wasserstandselektroden sind derart ausgebildet, dass sie in einen Wassersammelraum eines Filtergehäuses ragen, wenn das Wasserabscheideelement in das Filtergehäuse eingebaut ist. Jede Wasserstandselektrode ist über jeweils eine, bevorzugt im Wesentlichen ringförmige Kontaktelektrode kontaktierbar. Die Kontaktelektroden können durch Abgriffelektroden eines Mittelrohrelementes kontaktierbar sein. In diesem Fall weist der Siebträger vorzugsweise in Wasserabscheideelementlängsrichtung zu den Wasserstandselektroden hin einen geschlossenen Aufnahmeschacht für das Mittelrohrelement auf, so dass keine Dichtung zwischen Mittelrohrelement und Siebträger vorgesehen werden muss.

## Patentansprüche

1. Wasserabscheideelement (14, 54, 110, 136, 152, 164, 182, 194) für einen Kraftstofffilter (10, 134, 144, 162, 176) eines Kraftfahrzeuges,
wobei das Wasserabscheideelement (14, 54, 110, 136, 152, 164, 182, 194) zwei Wasserstandselektroden (34, 36, 56, 58, 74, 76) zur Detektion von Stauwasser in einem Wassersammelraum (32) des Kraftstofffilters (10, 134, 144, 162, 176) aufweist und die Wasserstandselektroden (34, 36, 56, 58, 74, 76) über zwei Kontaktelektroden (40, 42, 66, 68, 82, 84) elektrisch kontaktierbar sind, wobei die Kontaktelektroden (40, 42, 66, 68, 82, 84) mit den Wasserstandselektroden (34, 36, 56, 58, 74, 76) elektrisch leitfähig verbunden sind,
wobei das Wasserabscheideelement (14, 54, 110, 136, 152, 164, 182, 194) zum Wasserabscheiden ein Endabscheidersieb (22) aufweist, wobei das Endabscheidersieb (22) in einem Siebträger (38, 62, 72) angeordnet oder ausgebildet ist, wobei der Siebträger (38, 62, 72) radial zur Wasserabscheideelementlängsachse (30, 60) angeordnet oder ausgebildet ist,
wobei der Siebträger (38) über eine Rastverbindung (50) mit einer Endplatte (46) des Wasserabscheideelements (14) verbunden ist, wobei die Wasserstandselektroden (34, 36) bei an der Endplatte (46) verrastetem Siebträger (38) jeweils über einen unterbrechbaren federelastischen Kontakt (48, 52) mit den Kontaktelektroden (40, 42) elektrisch verbunden sind.

2. Wasserabscheideelement nach Anspruch 1, bei dem das Wasserabscheideelement (14, 54, 110, 136, 152, 164, 182, 194) ein Partikelfiltermedium (16, 112) aufweist, das an einem Mittelrohr abgestützt ist.

3. Wasserabscheideelement nach Anspruch 1 oder 2, bei dem das Wasserabscheideelement (14, 54, 110, 136, 152, 164, 182, 194) zum Wasserabscheiden eine Sedimentationsöffnung aufweist.

4. Wasserabscheideelement nach einem der vorhergehenden Ansprüche, bei dem das Wasserabscheideelement (14, 54, 110, 136, 152, 164, 182, 194) zum Wasserabscheiden ein Koaleszermedium (18) aufweist.

5. Wasserabscheideelement (14, 54, 110, 136, 152, 164, 182, 194) nach einem der vorhergehenden Ansprüche, bei dem eine erste Kontaktelektrode (40, 42, 66, 68, 82, 84) radial zur Wasserabscheideelementlängsachse (30, 60) ringförmig ausgebildet ist.

6. Wasserabscheideelement (14, 54, 110, 136, 152, 164, 182, 194) nach Anspruch 5, bei dem eine zweite Kontaktelektrode (40, 42, 66, 68, 82, 84) radial zur Wasserabscheideelementlängsachse (30, 60) ringförmig ausgebildet ist.

7. Wasserabscheideelement nach einem der vorhergehenden Ansprüche, bei dem die Kontaktelektroden (40, 42, 66, 68) zumindest teilweise auf einer Endplatte (46, 64) des Wasserabscheideelements (14, 54) angeordnet oder ausgebildet sind.

8. Wasserabscheideelement nach einem der vorhergehenden Ansprüche, bei dem die Verbindungsleitungen zwischen den Wasserstandselektroden (34, 36, 56, 58, 74, 76) und den Kontaktelektroden (40, 42, 66, 68, 82, 84) zumindest abschnittsweise in einem Mittelrohr und/oder in einem Siebträger (38, 62, 72) verlaufen.

9. Wasserabscheideelement nach Anspruch 7 oder 8, bei dem eine erste Wasserstandselektrode (34, 56) über eine elektrische Verbindungsleitung (44) mit einer bezüglich der Wasserabscheideelementlängsachse (30, 60) außen liegenden ersten Kontaktelektrode (40, 66) und eine zweite Wasserstandselektrode (36, 58) mit einer bezüglich der Wasserabscheideelementlängsachse (30, 60) innen liegenden zweiten Kontaktelektrode (42, 68) verbunden ist, wobei die Verbindungsleitung (44) zumindest teilweise in der Endplatte (46, 64) eingebettet zwischen der zweiten Kontaktelektrode (42, 68) und einer Unterseite der Endplatte (46, 64) verläuft.

10. Wasserabscheideelement nach einem der Ansprüche 1 bis 9, bei dem die Kontaktelektroden (82, 84) in einem Innenraum des Siebträgers (72) angeordnet oder ausgebildet sind, wobei die Kontaktelektroden (82, 84) jeweils durch eine zumindest teilweise federelastisch ausgebildete Abgriffelektrode (78, 80) kontaktierbar sind und die Abgriffelektroden (78, 80) zumindest abschnittsweise radial nach außen gerichtet an einem Mittelrohrelement (70) des Filters angeordnet oder ausgebildet sind.

11. Wasserabscheideelement nach Anspruch 10, bei dem der Siebträger (72) an seiner zu den Wasserstandselektroden (74, 76) hinweisenden Unterseite (90) im Bereich des Mittelrohrelements (70) geschlossen ausgebildet ist.

12. Wasserabscheideelement nach einem der vorhergehenden Ansprüche in Verbindung mit Anspruch 4, wobei das Partikelfiltermedium (16), das Koaleszermedium (18), die Sedimentationsöffnung (20) und der Endabscheidersieb (22) nacheinander radial zur Wasserabscheideelementlängsachse (30, 60) angeordnet sind.

13. Wasserabscheideelement nach einem der vorhergehenden Ansprüche, wobei das Wasserabscheideelement (110, 136, 152, 164, 182, 194) eine elektrisch leitfähige Kurzschlussbrücke (124, 138, 154) zur elektrischen Überbrückung von zumindest zwei an einer Innenseite (128) des Filtergehäuses (126, 146, 156, 170) angeordneten oder ausgebildeten Filtergehäuseelektroden (130, 132, 148, 150, 158, 160, 172, 174) aufweist.

14. Filter (10, 134, 144, 162, 176) mit einem Wasserabscheideelement (14, 54, 110, 136, 152, 164, 182, 194) nach einem der vorhergehenden Ansprüche und einem Filtergehäuse (12, 126, 146, 156, 170), das einen Wassersammelraum (32) aufweist, wobei die Wasserstandselektroden (34, 36, 56, 58, 74, 76) bei in das Filtergehäuse (12, 126, 146, 156, 170) eingebrachtem Wasserabscheideelement (14, 54, 110, 136, 152, 164, 182, 194) zumindest teilweise in den Wassersammelraum (32) ragen.

## Claims

1. Water-separating element (14, 54, 110, 136, 152, 164, 182, 194) for a fuel filter (10, 134, 144, 162, 176) of a motor vehicle,
wherein the water-separating element (14, 54, 110, 136, 152, 164, 182, 194) comprises two water level electrodes (34, 36, 56, 58, 74, 76) for detecting backwater in a water collecting chamber (32) of the fuel filter (10, 134, 144, 162, 176) and that the water level electrodes (34, 36, 56, 58, 74, 76) can be electrically contacted via two contact electrodes (40, 42, 66, 68, 82, 84), wherein the contact electrodes (40, 42, 66, 68, 82, 84) are connected to the water level electrodes (34, 36, 56, 58, 74, 76) in an electrically conductive manner,
wherein the water-separating element (14, 54, 110, 136, 152, 164, 182, 194) comprises a final separator sieve (22) for separating water, wherein the final separator sieve (22) is disposed or realized in a sieve support (38, 62, 72), wherein the sieve support (38, 62, 72) is disposed or realized radially with respect to the longitudinal axis of the water-separating element (30, 60),
wherein the sieve support (38) is connected to the end plate (46) of the water-separating element (14) via a snap-in connection (50), wherein the water level electrodes (34, 36) are each electrically connected to the contact electrodes (40, 42) via an interruptible elastic contact (48, 52) when the sieve support (38) is snap-connected to the end plate (46).

2. Water-separating element according to claim 1, wherein the water-separating element (14, 54, 110, 136, 152, 164, 182, 194) comprises a particulate filter medium (16, 112) supported by a central tube.

3. Water-separating element according to claim 1 or 2, wherein the water-separating element (14, 54, 110, 136, 152, 164, 182, 194) comprises a sedimentation opening for separating water.

4. Water-separating element according to any one of the preceding claims, wherein the water-separating element (14, 54, 110, 136, 152, 164, 182, 194) comprises a coalescer medium (18) for separating water.

5. Water-separating element (14, 54, 110, 136, 152, 164, 182, 194) according to any one of the preceding claims, wherein a first contact electrode (40, 42, 66, 68, 82, 84) is realized radially with respect to the longitudinal axis of the water-separating element (30, 60) in an annular shape.

6. Water-separating element (14, 54, 110, 136, 152, 164, 182, 194) according to claim 5, wherein a second contact electrode (40, 42, 66, 68, 82, 84) is realized radially with respect to the longitudinal axis of the water-separating element (30, 60) in an annular shape.

7. Water-separating element according to any one of the preceding claims, wherein the contact electrodes (40, 42, 66, 68) are disposed or realized, at least partially, on an end plate (46, 64) of the water-separating element (14, 54).

8. Water-separating element according to any one of the preceding claims, wherein the connecting lines between the water level electrodes (34, 36, 56, 58, 74, 76) and the contact electrodes (40, 42, 66, 68, 82, 84) extend, at least sectionwise, in a central tube and/or in a sieve support (38, 62, 72).

9. Water-separating element according to claim 7 or 8, wherein a first water level electrode (34, 56) is connected via an electrical connecting line (44) to a first contact electrode (40, 66) located outside with respect to the longitudinal axis of the water-separating element (30, 60) and a second water level electrode (36, 58) is connected to a second contact electrode (42, 66) which is located inside with respect to the longitudinal axis of the water-separating element (30, 60), wherein the connecting line (44) extends, at least partially incorporated in the end plate (46, 64), between the second contact electrode (42, 68) and an underside of the end plate (46, 64).

10. Water-separating element according to any one of claims 1 to 9, wherein the contact electrodes (82, 84) are disposed or realized in an interior space of the sieve support (72), wherein the contact electrodes (82, 84) can each be contacted by an at least partially elastic pick-up electrode (78, 80) and the pick-up electrodes (78, 80) are disposed or realized, at least sectionwise, radially outwardly directed on a central tube element (70) of the filter.

11. Water-separating element according to claim 10, wherein the sieve support (72) is realized in a closed manner on its underside (90) pointing towards the water level electrodes (74, 76) in the area of the central pipe element (70).

12. Water-separating element according to any one of the preceding claims in connection with claim 4, wherein the particulate filter medium (16), the coalescing medium (18), the sedimentation opening (20) and the final separator sieve (22) are successively arranged radially to the longitudinal axis of the water separation element (30, 60).

13. Water-separating element according to any one of the preceding claims, wherein the water-separating element (110, 136, 152, 164, 182, 194) comprises an electrically conductive shorting bridge (124, 138, 154) for electrically bridging at least two filter housing electrodes (130, 132, 148, 150, 158, 160, 172, 174) disposed or realized on an interior side (128) of the filter housing (126, 146, 156, 170).

14. Filter (10, 134, 144, 162, 176) with a water-separating element (14, 54, 110, 136, 152, 164, 182, 194) according to any one of the preceding claims and a filter housing (12, 126, 146, 156, 170) comprising a water-collecting chamber (32), the water level electrodes (34, 36, 56, 58, 74, 76) projecting, at least partially, into the water collecting space (32) when the water-separating element (14, 54, 110, 136, 152, 164, 182, 194) is inserted into the filter housing (12, 126, 146, 156, 170).

## Revendications

1. Élément de séparation d'eau (14, 54, 110, 136, 152, 164, 182, 194) pour un filtre à carburant (10, 134, 144, 162, 176) d'un véhicule automobile,
dans lequel l'élément de séparation d'eau (14, 54, 110, 136, 152, 164, 182, 194) présente deux électrodes de niveau d'eau (34, 36, 56, 58, 74, 76) pour détecter l'eau de retenue dans un collecteur d'eau (32) du filtre à carburant (10), 134, 144, 162, 176) et que les électrodes de niveau d'eau (34, 36, 56, 58, 74, 76) peuvent être mises en contact électriquement par deux électrodes de contact (40, 42, 66, 68, 82, 84), les électrodes de contact (40, 42, 66, 68, 82, 84) étant reliées de manière électroconductrice aux électrodes de niveau d'eau (34, 36, 56, 58, 74, 76),
dans lequel l'élément de séparation d'eau (14, 54, 110, 136, 152, 164, 182, 194) présente un tamis de séparation final (22) pour séparer l'eau, le tamis de séparation final (22) étant disposé ou réalisé dans un porte-tamis (38, 62, 72), le porte-tamis (38, 62, 72) étant disposé ou réalisé de manière radiale par rapport à l'axe longitudinal de l'élément de séparation d'eau (30, 60),
dans lequel le porte-tamis (38) est relié à la plaque d'extrémité (46) de l'élément de séparation d'eau (14) par une liaison par encliquetage (50), les électrodes de niveau d'eau (34, 36), lorsque le porte-tamis (38) est enclenché à la plaque d'extrémité (46), étant reliées chacune électriquement aux électrodes de contact (40, 42) par un contact élastique interruptible (48, 52).

2. Élément de séparation d'eau selon la revendication 1, dans lequel l'élément de séparation d'eau (14, 54, 110, 136, 152, 164, 182, 194) présente un milieu filtrant particulaire (16, 112) soutenu sur un tube central.

3. Élément de séparation d'eau selon la revendication 1 ou 2, dans lequel l'élément de séparation d'eau (14, 54, 110, 136, 152, 164, 182, 194) présente une ouverture de sédimentation pour séparer l'eau.

4. Élément de séparation d'eau selon l'une des revendications précédentes, dans lequel l'élément de séparation d'eau (14, 54, 110, 136, 152, 164, 182, 194) présente un milieu coalescent (18) pour séparer l'eau.

5. Élément de séparation d'eau (14, 54, 110, 136, 152, 164, 182, 194) selon l'une des revendications précédentes, dans lequel une première électrode de contact (40, 42, 66, 68, 82, 84) est réalisée en forme d'anneau de manière radiale par rapport à l'axe longitudinal de l'élément de séparation d'eau (30, 60) .

6. Élément de séparation d'eau (14, 54, 110, 136, 152, 164, 182, 194) selon la revendication 5, dans lequel une seconde électrode de contact (40, 42, 66, 68, 82, 84) est réalisée en forme d'anneau de manière radiale par rapport à l'axe longitudinal de l'élément de séparation d'eau (30, 60).

7. Élément de séparation d'eau selon l'une des revendications précédentes, dans lequel les électrodes de contact (40, 42, 66, 68) sont, au moins en partie, disposées ou réalisées sur une plaque d'extrémité (46, 64) de l'élément de séparation d'eau (14, 54).

8. Élément de séparation d'eau selon l'une des revendications précédentes, dans lequel les lignes de raccordement entre les électrodes de niveau d'eau (34, 36, 56, 58, 74, 76) et les électrodes de contact (40, 42, 66, 68, 82, 84) s'étendent, au moins sur certaines sections, dans un tube central et/ou dans un porte-tamis (38, 62, 72).

9. Élément de séparation d'eau selon la revendication 7 ou 8, dans lequel une première électrode de niveau d'eau (34, 56) est reliée par une ligne de raccordement électrique (44) à une première électrode de contact (40, 66) située à l'extérieur par rapport à l'axe longitudinal de l'élément de séparation d'eau (30, 60) et une seconde électrode de niveau d'eau (36, 58) reliée à une seconde électrode de contact (42, 68) qui est située à l'intérieur par rapport à l'axe longitudinal de l'élément de séparation d'eau (30, 60), la ligne de raccordement (44) s'étendant, au moins en partie incorporée dans la plaque d'extrémité (46, 64), entre la seconde électrode de contact (42, 68) et une face inférieure de la plaque d'extrémité (46, 64).

10. Élément de séparation d'eau selon l'une des revendications 1 à 9, dans lequel les électrodes de contact (82, 84) sont disposées ou réalisées dans un espace intérieur du porte-tamis (72), les électrodes de contact (82, 84) pouvant être mises en contact chacune par une électrode de prélèvement (78, 80), au moins partiellement élastique, et les électrodes de prélèvement (78, 80) étant disposées ou réalisées, au moins sur certaines sections, en sens radial vers l'extérieur sur un élément de tube central (70) du filtre.

11. Élément de séparation d'eau selon la revendication 10, dans lequel le porte-tamis (72) est réalisé fermé sur sa face inférieure (90) dirigée vers les électrodes de niveau d'eau (74, 76) dans la zone de l'élément de tube central (70).

12. Élément de séparation d'eau selon l'une des revendications précédentes en combinaison avec la revendication 4, dans lequel le milieu filtrant particulaire (16), le milieu coalescent (18), l'ouverture de sédimentation (20) et le tamis de séparation final (22) sont disposés l'un après l'autre de manière radiale par rapport à l'axe longitudinal de l'élément de séparation d'eau (30, 60).

13. Élément de séparation d'eau selon l'une des revendications précédentes, l'élément de séparation d'eau (110, 136, 152, 164, 182, 194) présentant un pont de court-circuit électroconducteur (124, 138 , 154), pour un pontage électrique des électrodes de boîtier de filtre (130, 132, 148, 150, 158, 160, 172, 174), au moins au nombre de deux, disposées ou réalisées sur une face interne (128) du boîtier de filtre (126, 146, 156, 170).

14. Filtre (10, 134, 144, 162, 176) présentant un élément de séparation d'eau (14, 54, 110, 136, 152, 164, 182, 194) selon l'une des revendications précédentes et un boîtier de filtre (12, 126, 146, 156, 170) présentant un collecteur d'eau (32), les électrodes de niveau d'eau (34, 36, 56, 58, 74, 76) faisant saillie, au moins en partie, dans le collecteur d'eau (32) lorsque l'élément de séparation d'eau (14, 54, 110, 136, 152, 164, 182, 194) est inséré dans le boîtier du filtre (12, 126, 146, 156, 170).
